(19) Europäisches Patentamt
European Patent Office
Office européen des brevets

(11) **EP 3 315 369 B1**

(12) **EUROPEAN PATENT SPECIFICATION**

(45) Date of publication and mention
of the grant of the patent:
**03.03.2021 Bulletin 2021/09**

(51) Int Cl.:
***B60T 8/175*** *(2006.01)*  ***B60T 8/171*** *(2006.01)*
***B60T 8/1755*** *(2006.01)*

(21) Application number: **16195472.2**

(22) Date of filing: **25.10.2016**

(54) **APPARATUS AND METHOD FOR CONTROLLING A TRACTION OF A VEHICLE**

VORRICHTUNG UND VERFAHREN ZUR STEUERUNG DER ZUGKRAFT EINES FAHRZEUGS

APPAREIL ET PROCÉDÉ DE COMMANDE D'UNE TRACTION D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.05.2018 Bulletin 2018/18**

(73) Proprietor: **KNORR-BREMSE Systeme für
Nutzfahrzeuge GmbH
80809 München (DE)**

(72) Inventor: **BALOGH, Levente
2310 Szigetszentmiklós (HU)**

(56) References cited:
**EP-A1- 0 995 659      WO-A1-81/03151
WO-A1-99/38738      WO-A2-2009/019022**

**Description**

The present invention relates to an apparatus and a method for traction control of a vehicle and, in particular, to a method to override a driver parking brake demand in relation to a wheel slip for commercial vehicles.

Many vehicles need to have two brake systems, one which is a service brake for normal braking actions and the other is the parking brake. Both brake systems are independent to ensure a secure stopping of the vehicle. If the service brake should fail, the parking brake acts as a secondary brake. For commercial vehicles parking brakes are often operated by pressurized air and may comprise spring-loaded brake cylinders, wherein the spring engages the brake automatically, if no sufficient air pressure is applied. The parking brake is released by applying compressed air to a spring-loaded brake cylinder to overcome the spring force. The permanently acting spring force ensures that the vehicle can only be moved during vehicle operations, whereas the parking brake remains securely applied otherwise.

An electronical control is more and more implemented also in parking brake systems of commercial vehicles. The electronic control allows and improves the operation of the parking brake. In conventional applications, the electronically controlled parking brake system is used for an automatic release or an automatic actuation of the parking brake. In addition to these applications, in situations, where the parking brake acts as a secondary braking system for the vehicle, still need further improvements.

However, any improvements for the parking brake have to take into account legal requirements. For example, the design shall ensure that the brake force is proportionally controllable by the driver to maintain the stability of the vehicle in case the secondary brake is employed, e.g. due to a failure of the primary brake. In addition, there are vehicles that fulfil the mandatory requirements by service brake ABS systems (ABS = anti-lock braking system) without an acceleration traction control feature by technically ensuring that a brake force different from the driver demand cannot be applied.

The employment of the parking brake during the motion of the vehicle is a rare situation. In most cases the parking brake is employed as a secondary braking system only if the service brake fails. As a result, the experience of the driver in controlling the braking force using the parking brake is limited - in particular when the driver attempts to keep the vehicle stable while actuating the parking brake lever. A loss of stability in such situations occurs frequently and represents an increasing security risk.

On the other hand, a vehicle system without an acceleration traction control can be very demanding for the driver too. In particular, slippery road situations do not only cause safety risks, but may likewise result in delivery delays and additional operational costs. WO81/0315 A1 discloses a conventional wheel slip control on differentially driven wheels, wherein a park brake system is used to avoid wheels running at different speeds and lost traction by one wheel.

Although a slip control for braking is mandatory in many regions, a traction control system is often optional and thus not implemented - even in view of the increased safety risks and losses in the transportation robustness.

Therefore, there is a demand to implement a traction control system by simple means. At least some of the above-mentioned problems are solved by an apparatus according to claim 1, a vehicle according to claim 9, and a method according to claim 12. The dependent claims relate to further specifically advantageous realizations.

The present invention relates to an apparatus for controlling a traction of a vehicle according to claim 1. The vehicle comprises a parking brake system with a spring-loaded brake cylinder operable to release the parking brake against a spring force using pressurized air. The parking brake system is configured to brake one or more driven wheels of the vehicle. The apparatus comprises a data interface module and a braking control module. The data interface module is configured to receive information depending on a wheel slip of the one or more (driven) wheels of the vehicle. The braking control module is configured to determine the wheel slip based on the received information and to control the parking brake system to keep the wheel slip below a threshold value, thereby controlling the traction of the vehicle. The traction control may further maintain a minimum wheel speed of at least one driven wheel.

It will be appreciated that a wheel slip can be positive or negative dependent on whether the vehicle is accelerating or decelerating. The threshold can thus relate either to a positive or to a negative slip value. Optionally, it is also possible that at least two thresholds define a slip range within which a slip of the driven wheels can be kept, wherein the zero value of the slip may not be included in the range to ensure an efficient acceleration. The braking control module may thus be configured to keep the wheel slip within a predefined slip range.

It is further understood that the parking brake can be used independently from the normal service brake used during normal driving operation. The spring-loaded cylinder comprises a chamber with a spring which ensures that the parking brake is employed and thus the vehicle is braked unless at least a minimum pressure is applied to the chamber to release the parking brake, thereby allowing the vehicle to be moved.

Optionally, the braking control module is configured to be operated without an input of a driver of the vehicle and/or to override a parking brake demand of the driver. For example, when starting the vehicle, the driver will release the parking brake and use the service brake during normal braking operations. However, during this normal driving operation of the vehicle, the apparatus may be configured to override the release demand of the driver in order to implement a traction control for the vehicle. As a consequence, the parking brake is not only used as a secondary braking system, but actively to implement the traction control. This is made possible if the parking brake is electronically controlled and not only by using a hand lever of the driver to release or to activate the parking brake. Since the traction control is implemented by using the parking brake (and not the service brake), the service brake can still be used for anti-lock actions (as ABS) independently of the parking brake. Since the parking brake is in most vehicles only implemented as a secondary braking system which is employed in case the normal service brake fails, it is not used over most times during normal operations of the vehicle and thus can be employed for the traction control without interfering it purpose.

Optionally, the braking control module is configured to control the parking brake to brake the one or more driven wheels differently from one of the other wheels of the vehicle. The traction control is typically implemented on wheels of a driven axle. Thus, by braking at least one wheel of the driven axle an applied momentum on all wheels of the driven axle can be equalized without the need to control the acceleration moment exerted by the engine on wheels of the driven axle. As a result, a yaw moment exerted on the vehicle can be controlled during the acceleration of the vehicle.

Of course, the wheel slip may be determined directly from a comparison of a rotational speed of the wheels as compared to a velocity of the vehicle. However, the apparatus does not necessarily need to determine or calculate the wheel slip itself. On the contrary, the apparatus may obtain this quantity from another control unit of the vehicle in order to act accordingly on at least one of the driven wheels. Therefore, the data interface module may further be configured to retrieve a value indicating a current wheel slip from a control unit of the vehicle.

The vehicle further comprises a dynamic sensor operable to sense a yaw moment of the vehicle and the data interface module is further configured to receive sensor data from the dynamic sensor. The braking control module is thus configured to modify the threshold value for the wheel slip based on the yaw moment.

Furthermore, the vehicle may comprise a wheel speed sensor and/or a vehicle speed sensor, in which case the data interface module may be configured to receive data indicating the wheel speed and/or the vehicle speed, and the braking control module may be configured to determine the wheel slip as ratio of the wheel speed and the vehicle speed variable.

The vehicle may further comprise at least one of the following additional sensors: an engine speed, a transmission axle sensor, an odometer, a rotational speed sensor, wherein the at least one additional sensor is connected permanently or temporarily with one or more driven wheels. Accordingly, the data interface module may further be configured to receive additional sensor data from the at least one additional sensor, and the braking control module may be configured to determine the wheel speed based on the received additional sensor data.

Optionally, the vehicle further comprises at least one of the following supplemental sensors: a GPS sensor, an environment objection detection sensor. Accordingly, the data interface module may further be configured to receive supplemental sensor data from the at least one supplemental sensors, and the braking control module may further be configured to determine the vehicle speed based on the supplemental sensor data. The present invention relates also to a vehicle comprising an apparatus as defined before and a parking brake system with a spring-loaded brake cylinder operable to release the parking brake against a spring force using pressurized air, wherein the parking brake system is configured to brake one or more driven wheels of the vehicle. Optionally the vehicle includes at least one dynamic sensor or camera configured to determine at least one of the following: a wheel speed, a yaw rate, a steering angle, engine speed, vehicle speed, an object in an environment of the vehicle. The parking brake system may further be configured to control the air pressure wheel-dependent.

The present invention relates also to a method for controlling a traction of a vehicle according to claim 12, wherein the vehicle again comprises a parking brake system with a spring-loaded brake cylinder operable to release the parking brake against a spring force using pressurized air and the parking brake system is again configured to brake one or more driven wheels of the vehicle. The method comprises the steps of receiving information depending on a wheel slip of the one or more wheels of the vehicle, determining the wheel slip based on the received information, and controlling the parking brake system to keep the wheel slip below a threshold value, thereby controlling the traction of the vehicle.

This method may also be implemented in software or as a computer program product. Thus, the present invention relates also to a computer program product having a program code stored thereon for performing the above-mentioned method, when the computer program is executed on a computer or processor. In addition, all functions described previously in conjunction with the apparatus can be realized as further method steps and be implemented in software or software modules.

Embodiments of the present invention solve at least some of the above-mentioned problems by using the parking brake system of an exemplary commercial vehicle for a traction control. In contrast to known wheel slip control systems, which operate only during a braking operation, i.e. a deceleration of the vehicle, embodiments of the present invention use the parking brake in situations where the vehicle shall be accelerated while keeping control over the vehicle during slippery road situations. As a result, the apparatus according to the present invention shall not avoid a blocking of the wheels, but instead shall ensure a sufficient traction in order to accelerate the vehicle while preventing undesired yaw moments. In particular, a spinning of the wheels shall be omitted which would otherwise limit the wheel-road friction. Also a lateral support (to the left of the right-hand side of the vehicle) is compromised if the wheels are spinning and do not have a sufficient traction with the road.

Some examples of the system and/or methods will be described in the following by way of examples only, and with respect to the accompanying figures, in which:

Fig. 1    depicts a commercial vehicle with an apparatus according to embodiments of the present invention;

Fig. 2    depicts the functional dependence of a friction between wheels and the road as a function of a slip.

Fig. 3    shows a flow chart of a method for controlling a traction of a vehicle according to embodiments of the present invention.

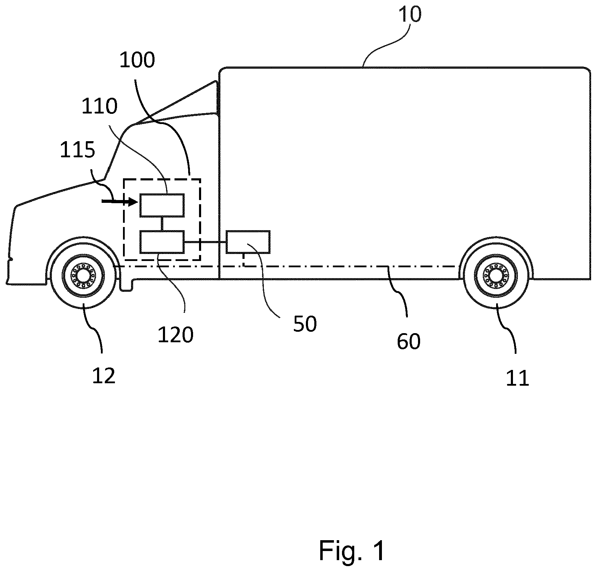

**Fig. 1** depicts a commercial vehicle 10 with an apparatus 100 according to embodiments of the present invention. The vehicle 10 comprises a parking brake system 50 with a spring-loaded brake cylinder (not shown) operable to release the parking brake 50 against a spring force using pressurized air, and the parking brake system 50 is configured to brake one or more driven wheels 11 of the vehicle 10. However, the parking brake system 50 may be configured to control brake actuators not only on the driven wheels 11, but also on non-driven wheels 12 of the vehicle 10. For this, corresponding connections 60 are provided, which may include a wiring (e.g. a vehicle communication bus) and/or hydraulic lines and/or pneumatic lines.

The apparatus 100 comprises a data interface module 110 and a braking control module 120. The data interface module 110 is configured to receive input information 115 that depends on a wheel slip of the one or more wheels 11 of the vehicle 10. The braking control module 120 is configured to determine the wheel slip based on the received information and to control the parking brake system 50 to keep the wheel slip below a threshold value, thereby controlling a traction of the vehicle 10.

The parking brake system 50 may, in particular, be electronically controlled and operate the spring-loaded chamber (spring-loaded brake cylinder) with compressed air. The pressure in the chamber(s) may be controlled by solenoid valves according to a command from a control electronics, for example, connected to the vehicle communication bus 60. The command may comprise information about wheel speed(s). Therefore, the brake force of the spring brakes is maintained without a driver request of a parking brake operation and keeps the (rotational) speed of driven wheels 11 in a predefined slip range.

The vehicle 10 may further comprise vehicle dynamic sensor(s) for detecting a wheel speed, a yaw rate, a steering angle or an environment object. This dynamic sensor may, for example, include a radar, a camera, a Lidar, etc. Accordingly, the connections 60 may be used to communicate the respective sensor data from the vehicle dynamic sensor to a control unit or directly to the data interface module 110 as input information 115.

The parking brake system 50 may further be configured to set the (pneumatic) pressure of at least one wheel 11 of the driven axle differently than the pressure of the other wheels 12. This may be controlled by the braking control module 120.

According to embodiments, the wheel speed is determined based on sensor data of a rotational speed sensor(s) in the vehicle 10, which may couple to axles in a permanent or temporary connection with the driven wheels. This one or more rotational speed sensor can detect an engine speed by sensing the transmission axle. They may also be an odometer or a wheel speed sensor(s).

In yet another embodiment the vehicle speed can be detected by relying on external information. For example, the vehicle speed may be determined directly from or by combining sensors for evaluating speeds of various wheels and/or a GPS sensor (GPS=global positioning system) and/or environment object detection sensor. These sensors may be part of the mentioned vehicle dynamic sensor(s), but may also be stand-alone sensors. Again, they may communicate the respective sensor data to a control unit or directly to the data interface module 110 as input information 115, for example, using at least in part the connections 60.

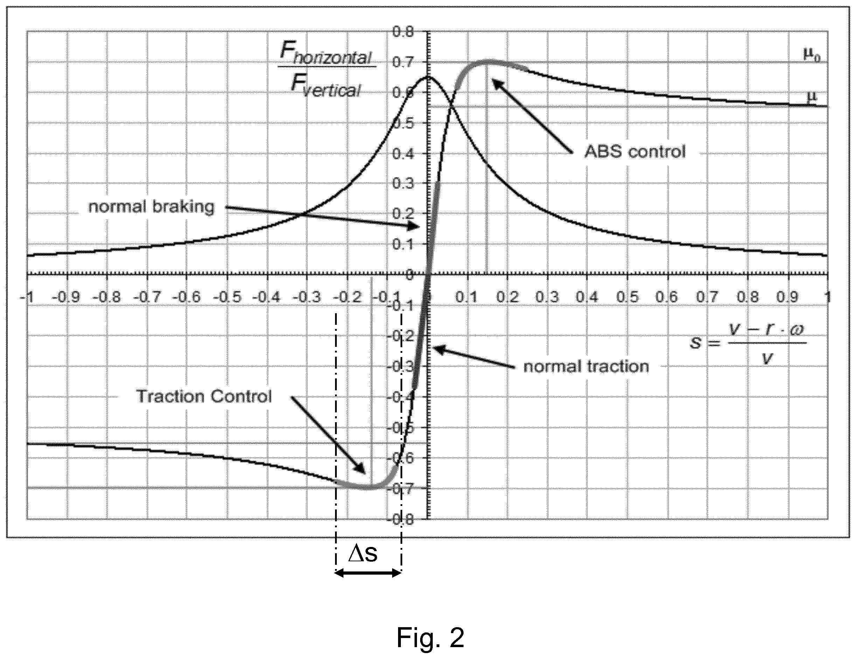

**Fig. 2** depicts the functional dependence of a friction between wheels and the road as a function of a slip. The slip is defined by:

$$s = (v - r \cdot \omega)/v \tag{1}$$

wherein v is the vehicle speed over the ground, r the radius and $\omega$ the angular velocity of the respective wheel that is in contact with the ground. Embodiment may use this definition or determine the slip s simply as the ratio of wheel speed $r \cdot \omega$ and vehicle speed variables v.

The friction is defined as the ratio between the exerted horizontal force $F_{hor}$ and the vertical force $F_{vert}$ and thus becomes 0 if no horizontal force is exerted, although wheels rotate (spinning wheels without any traction). The vertical force is basically given by the weight of the vehicle 10, whereas the horizontal force defines a desired braking or acceleration. The vertical force $F_{vert}$ is in most situations constant for a given vehicle (if the ground is flat), whereas the

horizontal force $F_{hor}$ has a maximum for a particular slip value.

In this notion, the braking of the vehicle 10 relates to positive values for the slip value s. In the example depicted in Fig. 2, the maximum horizontal force $F_{hor}$ is achieved at about s = 0.15. For higher slip values the horizontal force $F_{hor}$ decreases and reaches asymptotically a value $\mu$ that depends on the road situation, the tires, weather conditions and other conditions.

As for the traction, the slip value s is negative. Also here, a maximum horizontal force $F_{hor}$ (maximal acceleration for a given engine torque) is achieved for a slip value of about s = -0.15, whose absolute value again becomes smaller for more negative slip values. Therefore, the traction control is performed with the aim to get as close as possible to the maximum value for the negative horizontal force $F_{hor}$ at about a slip value of s = -0.15. This ensures that the momentum exerted by the vehicle engine on the driven wheels 11 is used with a maximum efficiency to accelerate the vehicle 10. Fig. 2 further shows that the normal traction occurs at about s = 0 where the vehicle is slowly accelerating with almost no slip.

The traction control is started when the slip "s" has reached an initial threshold value to optimize the transfer of the engine torque on the road and is kept in a slip range $\Delta s$, wherein the maximum of the longitudinal friction is within this slip range $\Delta s$ (- 0.23 < s < -0.05). To utilize this slip range $\Delta s$ the longitudinal force $F_{hor}$ shall be controlled by a balance of the torque of the power train and the brakes. According to the present invention, the slip "s" can be maintained separately for each wheel of the driven axle - in particular adaptive to different road conditions of the wheels on each side, because the vehicle 10 enables an independent control of the parking brake force on the driven wheels 11.

Since the vehicle 10 comprises optional vehicle dynamic sensor(s) for detecting a yaw moment of the vehicle, the slip range $\Delta s$ may be modified according to the detected yaw moment of the vehicle 10. These dynamic sensors may, for example, include a wheel speed sensor, a yaw rate sensor, a steering angle sensor or sensors which are able to measure a relative position of the vehicle in respect to non-moving objects (for example buildings, trees, bridges or other objects) around the vehicle.

The second curve in Fig. 2 (having a maximum at s=0) shows the lateral adhesion coefficient of the wheel and further illustrates that the lateral friction decreases by an increase in the longitudinal slip "s" resulting in potential lateral movements (to the side) and thus to a loss of stability. As the slip curve of the actual road can only be estimated, certain feedback measurements may be used in order to adapt the desired slip value "s" as a function of the yaw moment estimated by the vehicle dynamic sensors.

Once the desired slip value is determined, embodiments of the present invention operate the parking brake 50 without a driver request in order to control at least one wheel in accordance with the desired value. This way, a spinning of the driven wheels 11 is avoided and the longitudinal force can be maximized while the lateral force is kept on a level which is sufficient to keep the yaw rate of the vehicle 10 on the value which is intended by the driver.

In contrast to traction control functionalities implemented by service brake systems, embodiments do not require any additional components to be integrated - especially in case of an ABS system. However, an electronically controlled parking brake system 50 has all features needed to implement a traction control so that the service brake system is not needed for this functionality.

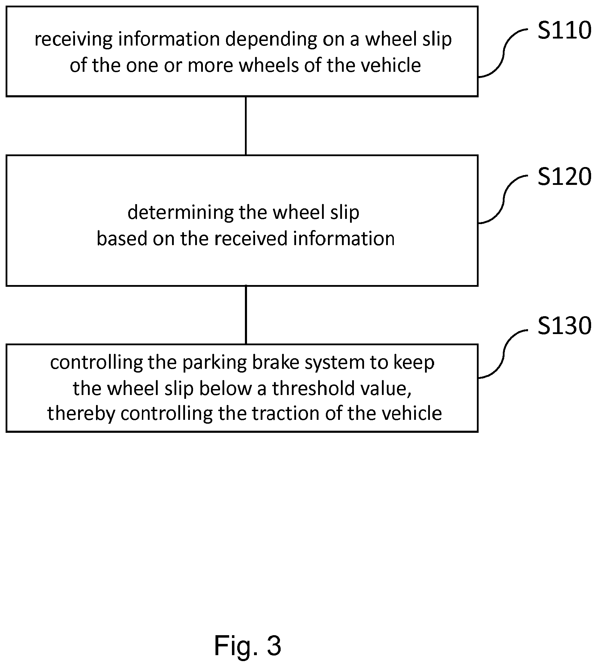

**Fig. 3** shows a flow chart of a method for controlling a traction of a vehicle according to embodiments of the present invention. The method comprises the steps: receiving S110 information 115 depending on a wheel slip of the one or more wheels of the vehicle 10; determining S120 the wheel slip based on the received information; and controlling S130 the parking brake system 50 to keep the wheel slip below a threshold value, thereby controlling the traction of the vehicle 10.

Functions of the apparatus 100 as described previously may be implemented as further optional method steps. In addition, any defined function may be provided through the use of dedicated hardware, such as a control unit being capable of executing software in association with appropriate software. Therefore, the method according to the present invention may also be implemented in form of a computer program having a program code for performing the method, when the computer program is executed on a computer or processor. Moreover, any entity described herein as "module", may correspond to or be implemented as "one or more modules", "one or more devices", "one or more units", etc. It will further be appreciated that the apparatus 100 may be realized as part of one of the control units of the vehicle 10, for exemple by installing the appropriate software.

The description and drawings merely illustrate the principles of the invention. It will thus be appreciated that those skilled in the art will be able to devise various arrangements that, although not explicitly described or shown herein, embody the principles of the invention and are included within its scope, as defined by the appended claims.

LIST OF REFERENCE SIGNS

10      vehicle

11      one or more driven wheels
12      non-driven wheels
50      parking brake system
100     apparatus
110     data interface module
115     input information
120     braking control module
Δs      slip range
v       vehicle speed

**Claims**

1. An apparatus (100) for controlling a traction of a vehicle (10), the vehicle (10) comprising a parking brake system (50) with a spring-loaded brake cylinder operable to release the parking brake against a spring force using pressurized air, the parking brake system (50) being configured to brake one or more driven wheels (11) of the vehicle (10), wherein the vehicle (10) comprises a dynamic sensor operable to sense a yaw moment of the vehicle (10), the apparatus (100) being **characterized by:**

    - a data interface module (110) configured to receive input information (115) depending on a wheel slip of the one or more wheels (11) of the vehicle (10), the data interface module (110) is further configured to receive as input information (115) sensor data from the dynamic sensor; and
    - a braking control module (120) configured to determine the wheel slip based on the received information and to control the parking brake system (50) to keep the wheel slip below a threshold value, thereby controlling the traction of the vehicle (10), the braking control module (120) being further configured to modify the threshold value for the wheel slip based on the yaw moment.

2. The apparatus (100) of claim 1,
    **characterized in that**
    the braking control module (120) is configured to operate without an input of the driver of the vehicle (10) and/or to override a parking brake demand of the driver.

3. The apparatus (100) according to claim 1 or claim 2,
    **characterized in that**
    the braking control module (120) is configured to control the parking brake system (50) to brake the one or more driven wheels (11) differently from one of the other wheels (11, 12) of the vehicle (10).

4. The apparatus (100) of one of the preceding claims,
    **characterized in that**
    the braking control module (120) is further configured to keep the wheel slip within a predefined slip range (Δs).

5. The apparatus (100) according to one of the preceding claims,
    **characterized in that**
    the data interface module (110) is configured to retrieve a value indicating a current wheel slip from a control unit of the vehicle (10).

6. The apparatus (100) according to one of the preceding claims, wherein the vehicle (10) comprises a wheel speed sensor and a vehicle speed sensor, **characterized in that**

    - the data interface module (110) is configured to receive as input information (115) further data indicating the wheel speed and the vehicle speed, and
    - the braking control module (120) is configured to determine the wheel slip as a ratio of the wheel speed and the vehicle speed variable.

7. The apparatus (100) according to claim 6, wherein the vehicle (10) further comprises at least one of the following additional sensors an engine speed, a transmission axle sensor, an odometer, a rotational speed sensor, wherein the at least one additional sensor couples permanently or temporarily with one or more driven wheels, **characterized in that**

- the data interface module (110) is further configured to receive as input information (115) additional sensor data from the at least one additional sensor; and
- the braking control module (120) is configured to determine the wheel speed based on the received additional sensor data.

8. The apparatus (100) according to claim 6 or claim 7, wherein the vehicle (10) further comprises at least one of the following supplemental sensors: a GPS sensor, an environment objection detection sensor,
**characterized in that**

- the data interface module (110) is further configured to receive as input information (115) supplemental sensor data from the at least one supplemental sensors; and
- the braking control module (120) is configured to determine the vehicle speed based on supplemental sensor data.

9. A vehicle (10) comprising a parking brake system (50) with a spring-loaded brake cylinder operable to release the parking brake against a spring force using pressurized air, the parking brake system (50) being configured to brake one or more driven wheels (11, 12) of the vehicle (10),
**characterized by:**
an apparatus (100) according to one of the preceding claims.

10. The vehicle (10) of claim 9,
**characterized by**
at least one dynamic sensor or camera configured to determine at least one of the following: a wheel speed, a yaw rate, a steering angle, engine speed, vehicle speed, an object in an environment of the vehicle (10).

11. The vehicle (10) of claim 9 or claim 10,
**characterized in that**
the parking brake system (50) is configured to control air pressure wheel-dependent.

12. A method for controlling a traction of a vehicle (10), the vehicle (10) comprising a parking brake system (50) with a spring-loaded brake cylinder operable to release the parking brake against a spring force using pressurized air, the parking brake system (50) being configured to brake one or more driven wheels of the vehicle (10), wherein the vehicle (10) comprises a dynamic sensor operable to sense a yaw moment of the vehicle (10),
the method being **characterized by:**

- receiving (S110) input information (115) depending on a wheel slip of the one or more wheels of the vehicle (10) and from the dynamic sensor;
- determining (S120) the wheel slip based on the received information; and
- controlling (S130) the parking brake system (50) to keep the wheel slip below a threshold value, thereby controlling the traction of the vehicle (10) and to modify the threshold value for the wheel slip based on the yaw moment.

13. A computer program having a program code for performing the method of claim 12, when the computer program is executed on a computer or processor.

**Patentansprüche**

1. Eine Vorrichtung (100) zur Steuerung der Traktion eines Fahrzeugs (10), wobei das Fahrzeug (10) besitzt eine Feststellbremse (50) mit einem federbelasteten Bremszylinder, mit dem die Feststellbremse mithilfe von Druckluft entgegen einer Federkraft freigegeben wird; die Feststellbremse (50) ist dabei so konfiguriert, dass sie mindestens ein angetriebenes Rad (11) des Fahrzeugs (10) bremst, wobei das Fahrzeug (10) einen dynamischen Sensor besitzt, der das Giermoment des Fahrzeugs (10) erkennt;
die Vorrichtung (100) ist **gekennzeichnet durch:**

- ein Datenschnittstellenmodul (110), das so konfiguriert ist, dass es abhängig vom Schlupf mindestens eines Rades (11) des Fahrzeugs (10) Eingangsinformationen (115) empfängt; das Datenschnittstellenmodul (110) ist außerdem so konfiguriert, dass es Sensordaten des dynamischen Sensors als Eingangsinformationen (115) empfängt; und

- ein Modul zur Bremssteuerung (120), das so konfiguriert ist, dass es den Schlupf anhand der erhaltenen Informationen bestimmt und die Feststellbremse (50) steuert, um den Schlupf unter einem Grenzwert zu halten, und dabei die Traktion des Fahrzeugs (10) zu steuern, wobei das Modul zur Bremssteuerung (120) außerdem so konfiguriert ist, dass der Grenzwert des Schlupfs abhängig vom Giermoment verändert wird.

2.  Die Vorrichtung (100) aus Anspruch 1
    **ist gekennzeichnet durch**
    das Modul zur Bremssteuerung (120), das so konfiguriert ist, dass es ohne Einwirken des Fahrzeugführers (10) betrieben wird und/oder einen Befehl des Fahrzeugführers (10) zur Aktivierung der Feststellbremse überschreibt.

3.  Die Vorrichtung (100) gemäß Anspruch 1 oder Anspruch 2,
    **ist gekennzeichnet durch**
    das Modul zur Bremssteuerung (120), das so konfiguriert ist, dass es die Feststellbremse (50) so steuert, dass sie mindestens ein angetriebenes Rad (11), das sich von den anderen Rädern (11, 12) des Fahrzeugs (10) unterscheidet, bremst.

4.  Die Vorrichtung (100) aus einem der vorgenannten Ansprüche
    **ist gekennzeichnet durch**
    das Modul zur Bremssteuerung (120), das außerdem so konfiguriert ist, dass es den Schlupf innerhalb eines vordefinierten Schlupfbereichs hält (Δs).

5.  Die Vorrichtung (100) gemäß einem der vorgenannten Ansprüche
    **ist gekennzeichnet durch**
    das Datenschnittstellenmodul (110), das so konfiguriert ist, dass es einen Wert von einem Steuergerät des Fahrzeugs (10) abruft, der einen aktuellen Schlupf anzeigt.

6.  Die Vorrichtung (100) gemäß einem der vorgenannten Ansprüche, wobei das Fahrzeug (10) einen Radgeschwindigkeitssensor und einen Fahrzeuggeschwindigkeitssensor besitzt,
    **ist gekennzeichnet durch**

    - das Datenschnittstellenmodul (110), das so konfiguriert ist, dass es weitere Daten als Eingangsinformationen (115) empfängt, die die Radgeschwindigkeit und die Fahrzeuggeschwindigkeit anzeigen, und
    - das Modul zur Bremssteuerung (120), das so konfiguriert ist, dass es den Schlupf als Variable des Verhältnisses von Radgeschwindigkeit und Fahrzeuggeschwindigkeit ermittelt.

7.  Die Vorrichtung (100) gemäß Anspruch 6, wobei das Fahrzeug (10) außerdem mindestens einen der folgenden zusätzlichen Sensoren besitzt: Motordrehzahlsensor, Übertragungsachsensensor, Kilometerzählersensor oder Drehzahlsensor; wobei mindestens ein zusätzlicher Sensor permanent oder temporär mit mindestens einem angetriebenen Rad verbunden ist,
    **ist gekennzeichnet durch**

    - das Datenschnittstellenmodul (110), das außerdem so konfiguriert ist, dass es zusätzliche Sensordaten von mindestens einem zusätzlichen Sensor als Eingangsinformationen (115) empfängt; und
    - das Modul zur Bremssteuerung (120), das so konfiguriert ist, dass es anhand der erhaltenen zusätzlichen Sensordaten die Radgeschwindigkeit ermittelt.

8.  Die Vorrichtung (100) gemäß Anspruch 6 oder Anspruch 7, wobei das Fahrzeug (10) außerdem mindestens einen der folgenden zusätzlichen Sensoren enthält:

    GPS-Sensor, Erkennungssensor für Objekte im Umfeld des Fahrzeugs;
    **ist gekennzeichnet durch**

    - das Datenschnittstellenmodul (110), das außerdem so konfiguriert ist, dass es zusätzliche Sensordaten von mindestens einem zusätzlichen Sensor als Eingangsinformationen (115) empfängt; und
    - das Modul zur Bremssteuerung (120), das so konfiguriert ist, dass es anhand der zusätzlichen Sensordaten die Fahrzeuggeschwindigkeit ermittelt.

9. Ein Fahrzeug (10), das eine Feststellbremse (50) mit einem federbelasteten Bremszylinder besitzt, mit dem die Feststellbremse mithilfe von Druckluft entgegen einer Federkraft freigegeben wird; wobei die Feststellbremse (50) so konfiguriert ist, dass sie mindestens ein angetriebenes Rad (11, 12) des Fahrzeugs (10) bremst; **ist gekennzeichnet durch:**

eine Vorrichtung (100) gemäß einem der vorgenannten Ansprüche.

10. Das Fahrzeug (10) aus Anspruch 9,
**gekennzeichnet durch**

mindestens einen dynamischen Sensor oder eine Kamera, die so konfiguriert sind, dass mindestens einer der folgenden Faktoren ermittelt wird: Radgeschwindigkeit, Gierrate, Lenkwinkel, Motorgeschwindigkeit, Fahrzeuggeschwindigkeit, ein Objekt im Umfeld des Fahrzeugs (10).

11. Das Fahrzeug (10) aus Anspruch 9 oder Anspruch 10,
**ist gekennzeichnet durch**

die Feststellbremse (50), die so konfiguriert ist, dass sie den Luftdruck abhängig von Rad steuert.

12. Eine Methode zur Steuerung der Traktion eines Fahrzeugs (10), wobei das Fahrzeug (10) eine Feststellbremse (50) mit einem federbelasteten Bremszylinder besitzt, mit dem die Feststellbremse mithilfe von Druckluft entgegen einer Federkraft freigegeben wird; die Feststellbremse (50) ist dabei so konfiguriert, dass sie mindestens ein angetriebenes Rad des Fahrzeugs (10) bremst, wobei das Fahrzeug (10) einen dynamischen Sensor besitzt, der das Giermoment des Fahrzeugs (10) erkennt;
die Methode **ist gekennzeichnet durch:**

- den Empfang (S110) von Eingangsinformationen (115) in Abhängigkeit vom Schlupf mindestens eines Rades des Fahrzeugs (10) und vom dynamischen Sensor;
- die Ermittlung (S120) des Schlupfs anhand der empfangenen Informationen; und
- die Steuerung (S130) der Feststellbremse (50), um den Schlupf unter einem Grenzwert zu halten, und daben die Traktion des Fahrzeugs (10) zu steuern und den Grenzwert des Schlupfs abhängig vom Giermoment zu ändern.

13. Ein Computerprogramm, das einen Programmcode zur Ausführung der Methode von Anspruch 12 besitzt, wenn das Computerprogramm auf einem Computer oder Prozessor ausgeführt wird.

**Revendications**

1. Dispositif (100) de commande d'une traction d'un véhicule (10), le véhicule (10) comprenant un système (50) de frein de stationnement ayant un cylindre de frein à ressort accumulateur pouvant fonctionner pour desserrer le frein de stationnement à l'encontre d'une force de ressort utilisant de l'air comprimé, le système (50) de frein de stationnement étant configuré pour freiner une ou plusieurs roues (11) menées du véhicule (10), le véhicule (10) comprenant un capteur dynamique pouvant fonctionner pour détecter un moment de lacet du véhicule (10).
le dispositif (100) étant **caractérisé par** :

- un module (110) d'interface de données, configuré pour recevoir une information (115) d'entrée dépendant d'un glissement de l'une ou des plusieurs roues (11) du véhicule (10), le module (110) d'interface de données étant configuré en outre pour recevoir comme information (115) d'entrée une donnée de capteur du capteur dynamique ; et
- un module (120) de commande de freinage configuré pour déterminer le glissement de la roue sur la base de l'information reçue et pour commander le système (50) de frein de stationnement, afin de maintenir le glissement de la roue en dessous d'une valeur de seuil, en commandant ainsi la traction du véhicule (10), le module (120) de commande de freinage étant configuré en outre pour modifier la valeur de seuil du glissement de la roue sur la base du moment de lacet.

2. Dispositif (100) suivant la revendication 1,
**caractérisé en ce que**

le module (120) de commande de freinage est configuré pour fonctionner sans un signal d'entrée du conducteur du véhicule (10) et/ou avoir priorité sur une demande de frein de stationnement du conducteur.

**3.** Dispositif (100) suivant la revendication 1 ou 2, **caractérisé en ce que** le module (120) de commande de freinage est configuré pour commander le système (50) de frein de stationnement, afin de freiner une ou les plusieurs roues (11) menées différemment de l'une des autres roues (11,12) du véhicule (10).

**4.** Dispositif (100) suivant l'une des revendications précédentes, **caractérisé en ce que**
le module (120) de commande de freinage est configuré en outre pour maintenir le glissement de la roue dans une plage (∆s) de glissement définie à l'avance.

**5.** Dispositif (100) suivant l'une des revendications précédentes **caractérisé en ce que** le module (110) d'interface de données est configuré pour retrouver une valeur indiquant un glissement courant de la roue dans une unité de commande de véhicule (10).

**6.** Dispositif (100) suivant l'une des revendications précédentes dans lequel le véhicule (10), comprend un capteur de vitesse de roue et un capteur de vitesse du véhicule,
**caractérisé en ce que**

- le module (110) d'interface de données est configuré pour recevoir comme information (115) d'entrée, en outre, des données indiquant la vitesse de la roue et la vitesse du véhicule et
- le module (120) de commande de freinage est configuré pour déterminer le glissement de la roue comme un rapport variable entre la vitesse de la roue et la vitesse du véhicule.

**7.** Dispositif (100) suivant la revendication 6, dans lequel le véhicule (10) comprend, en outre, au moins l'un des capteurs supplémentaires suivants, un capteur de la vitesse du moteur, un capteur de l'essieu de transmission, un odomètre, un capteur de vitesse de rotation, le au moins un capteur supplémentaire se couplant en permanence ou temporairement avec une ou plusieurs roues menées,
**caractérisé en ce que**

- le module (110) d'interface de données est configuré en outre pour recevoir comme information (115) d'entrée une donnée de capteur supplémentaire du au moins un capteur supplémentaire et
- le module (120) de commande de freinage est configuré pour déterminer la vitesse de la roue sur la base de la donnée de capteur supplémentaire, qui est reçue.

**8.** Dispositif (100) suivant la revendication 6 ou la revendication 7, dans lequel le véhicule (10) comprend, en outre, l'un des capteurs supplémentaires suivants :

un capteur GPS, un capteur de détection d'obstacles ambiants,
**caractérisé en ce que**

- le module (110) d'interface de données est configuré, en outre, pour recevoir, comme information (115) d'entrée, la donnée de capteur supplémentaire du au moins un capteur supplémentaire et
- le module (120) de commande de freinage est configuré pour déterminer la vitesse du véhicule sur la base de la donnée de capteur supplémentaire.

**9.** Véhicule(10) comprenant un système (50) de frein de stationnement ayant un cylindre de frein à ressort accumulateur pouvant fonctionner pour desserrer le frein de stationnement à l'encontre d'une force de ressort utilisant de l'air comprimé, le système (50) de frein de stationnement étant configuré pour freiner une ou plusieurs roues (11,12) menées du véhicule (10), **caractérisé par** :

un dispositif (100) suivant l'une des revendications précédentes.

**10.** Véhicule (10) suivant la revendication 9,
**caractérisé par**
au moins un capteur dynamique ou une caméra configuré pour déterminer au moins l'un de ce qui suit : une vitesse de roue, un angle de lacet, un angle de braquage, une vitesse du moteur, une vitesse du véhicule, un objet dans un environnement du véhicule (10).

**11.** Véhicule (10) suivant la revendication 9 ou suivant la revendication 10, **caractérisé en ce que** le système (50) de frein de stationnement est configuré pour régler la pression de l'air en fonction de la roue.

**12.** Procédé de commande d'une traction d'un véhicule (10),

le véhicule (10) comprenant un système (50) de frein de stationnement ayant un cylindre de frein à ressort accumulateur pouvant fonctionner pour desserrer le frein de stationnement à l'encontre d'une force de ressort utilisant de l'air comprimé, le système (50) de frein de stationnement étant configuré pour freiner une ou plusieurs roues menées du véhicule (10), le véhicule (10) comprenant un capteur dynamique pouvant fonctionner pour détecter un moment de lacet du véhicule (10),

le procédé étant **caractérisé par** :

- la réception (S110) d'une information (115) d'entrée dépendant d'un glissement de roue de l'une ou des plusieurs roues du véhicule (10) et du capteur dynamique ;
- la détermination (S120) du glissement de roue sur la base de l'information reçue ; et
- la commande (S130) du système (50) de frein de stationnement pour maintenir le glissement de roue en dessous d'une valeur de seuil, en commandant ainsi la traction du véhicule (10), et pour modifier la valeur de seuil du glissement de roue sur la base du moment de lacet.

**13.** Programme d'ordinateur ayant un code de programme pour

effectuer le procédé suivant la revendication 12, lorsque le programme d'ordinateur est exécuté sur un ordinateur ou un processeur.

10

100

110

115

120

12

50

60

11

Fig. 1

$$\frac{F_{horizontal}}{F_{vertical}}$$

$\mu_0$

$\mu$

ABS control

normal braking

$$s = \frac{V - r \cdot \omega}{V}$$

normal traction

Traction Control

$\Delta s$

Fig. 2

EP 3 315 369 B1

receiving information depending on a wheel slip
of the one or more wheels of the vehicle

S110

determining the wheel slip
based on the received information

S120

controlling the parking brake system to keep
the wheel slip below a threshold value,
thereby controlling the traction of the vehicle

S130

Fig. 3

**REFERENCES CITED IN THE DESCRIPTION**

**Patent documents cited in the description**

- WO 810315 A1